Europäisches Patentamt

European Patent Office

Office européen des brevets

(19)

(11) Publication number: **0 0 1 2 2 1 8**
**A1**

(12) # EUROPEAN PATENT APPLICATION

(21) Application number: **79104344.1**

(22) Date of filing: **06.11.79**

(51) Int. Cl.³: **A 47 L 1/05,** A 46 B 13/02, B 60 S 3/04

(30) Priority: **14.11.78 US 960633**

(43) Date of publication of application: **25.06.80**
**Bulletin 80/13**

(84) Designated Contracting States: **AT BE CH DE FR GB IT
LU NL SE**

(71) Applicant: **Nuvite Chemical Compounds Corporation,
213 Freeman Street, Brooklyn New York 11222 (US)**

(72) Inventor: **Lester, Frank Richard Quail Ridge
Condominiums, No. 424 11178 Shell Drake Lane,
Boynton Beach Florida 33436 (US)**
Inventor: **Bullard, James, Route 2, Box 64, Adair
Oklahoma 74330 (US)**

(74) Representative: **Lorenz, Eduard et al,
Widenmayerstrasse 23, D-8000 München 22 (DE)**

(54) **Improved portable scrubbing tool.**

(57) A lightweight pneumatic powered portable scrubbing tool (1) is disclosed, having a scrubbing brush member (3) that is rotated by a cylindrically-shaped elongated air powered motor (15). The motor shaft (13) is affixed to the brush member (3) and supports the brush member (3). The motor housing is pivotally connected to an elongated main support pole (21), having an air supply hose (20) disposed therewithin and along the length thereof. The air supply hose exits, through a union (24), from a peripheral portion of the main support pole (21) and is interconnected with the motor. A fitting (17) is mounted on an opposite end of the main support pole (21), i. e., remote from the motor, for interconnection with a fluid source through an air hose (19). An extension support pole (29) fits over the main support pole (21) and can be extended to a preselected position along the length of the main support pole (21). Rotation of the extension support pole (29) in either direction relative to the main support pole (21) permits locking of the extension pole (29) to the main pole (21).

ACTORUM AG

-1-

IMPROVED PORTABLE SCRUBBING TOOL

Background of the Invention

The invention relates to a portable, lightweight, and easily maneuverable scrubbing tool comprising a pneumatically powered scrubbing brush interconnected with an elongated tubular, hand-held main support pole for the cleaning or scrubbing of relatively large, irregular surfaces, such as aircraft exteriors. The scrubbing tool also has applicability to polishing, buffing, brightening, and paint stripping.

In the cleaning of exterior aircraft surfaces, a detergent is sprayed onto the surface of the aircraft and then, for proper cleaning, the aircraft surface must be agitated by a brush in order to break the adhesive factor of the soil to the surface. The surface is then rinsed with water for completion of the cleaning procedure. It is known in the art to accomplish the agitation process with hand scrub brushes that are attached to wooden handles of various sizes. The cleaning operator manually agitates the surface of the aircraft by a back and forth scrubbing action which is time consuming and inefficient.

Certain rather sophisticated apparatus for cleaning surfaces of aircraft are known, as shown in U.S. Patent No. 3,648,316. Such a system requires a carriage that is positioned adjacent the aircraft and having extensible booms interconnected with the carriage. Such devices are complex and costly, both to manufacture and maintain.

Also known in the art are a variety of rotary brushes used for cleaning a variety of surfaces. Examples of such prior art brushes include those disclosed in U.S. Patent Nos. 1,369,567; 2,000,930; 3,074,088; 3,153,799; and 3,864,780. The present invention has advantages over these prior art brush systems as will be apparent from the description below.

Summary of the Invention

The invention relates to an improved portable scrubbing or cleaning tool, comprising a rotary scrubbing tool brush member powered by a pneumatic motor, or turbine, particularly an air-, or other noncombustible gas-, powered motor. The motor supports the scrubbing tool brush member and is narrowly shaped so as not to interfere with the surfaces to be cleaned during the cleaning operation. The motor and brush are interconnected with an elongated, tubular, main support pole to be held by the operator. The support pole is pivotally connected to the motor so that the brush member and motor unit can be angularly positioned with respect to the main support pole for cleaning difficult to reach surfaces. An extension pole fits over the main support pole and can be extended to a preselected position along the length of the main support pole. Rotation of the extension pole in either direction relative to the main pole permits locking of the extension pole to the main pole.

It is a primary object of the present invention to provide an improved scrubbing brush tool for cleaning large structures that have irregular, or hard-to-reach surfaces. The invention has particular utility for cleaning the exterior surfaces of aircraft, although it can be successfully employed in the cleaning of other large surfaces such as trucks, buses, buildings, and other commercial industrial cleaning jobs. The scrubbing tool has a number of interchangeable brushes with different functions; one brush is particularly suited to agitate the surface of the body to be cleaned in order to break down the adhesive factor between the soil and the surface. The scrubbing tool of the present invention is easily maneuverable, portable, and of light weight in order to clean such hard to reach areas as the aircraft flap well areas, gear well areas, fuselage, landing gears, cargo compartments, etc.

It is an object of this invention to provide a light weight and easily maneuverable scrubbing tool that is capable of adjustable extensions to different positions. It is further an object of the invention to provide a safe, power-operated tool that is operated by an air or other noncombustible gas motor, specifically avoiding electrically powered motors.

It is still further an object of the present invention to provide a scrubbing tool having a brush member supported on a light weight, compact, air-powered motor, the latter being cylindrically shaped, having a length substantially greater than the diameter thereof, so that the motor can be attached to the brush member as a unit, without interfering with the surfaces to be cleaned during the cleaning operation. In particular, it is an object of the present invention to provide a motor interconnected with a brush, wherein the motor is of a size so as not to extend beyond the periphery of the brush, and thus not interfere with the surfaces to be cleaned.

Still further, it is an object of the present invention to provide an air hose disposed within the main support pole for protecting the air hose during operation.

Another object of the present invention is to provide a portable scrubbing tool that is quickly and easily extensible to reach remote positions. An extension support pole is adjustably and selectively positioned over the main support pole, concentric therewith. The extension pole can be extended out and twist-locked by a novel locking mechanism at selected positions relative to the length of the main support pole.

It is also an object of the present invention to provide a disc brush having a circular mounting plate with bristles arranged circumferentially around the plate. The bristles at the annular surface of the mounting plate, adjacent the periphery of the plate are of a longer length than the inner bristles to catch any cleaning compound that is thrown by the inner bristles outward.

An alternative embodiment of this invention relates to an improved portable scrubbing tool comprising a rotary scrubbing tool brush member powered by a pneumatic motor, or turbine, particularly an air-, or other noncombustible gas-, powered motor. The motor supports the scrubbing tool bursh member and is narrowly shaped so as not to interfere with the surfaces to be cleaned during the cleaning operation. The motor and brush are interconnected with an elongated, tubular, main support pole to be held by the operator. The main support pole is pivotally connected to the motor so that the brush member and motor unit can be angularly positioned with respect to the main support pole for cleaning difficult to reach surfaces. The main support pole is interconnected with an auxiliary support pole at preselected positions along the length of the main support pole. In operation, the operator holds both the auxiliary support pole and the main support pole and maneuvers the brush onto the cleaning surface where it is rotated by the air- or gas-powered motor.

An object of the alternative embodiment of the present invention is to provide a portable and easily assembled scrubbing tool. In particular, an elongated main support pole is easily, and releaseably, pivotally secured to the motor housing. An auxiliary support pole is pivotally and releasably secured to the main support pole at preselected positions thereon. Still further, the present invention has as its object the use of quick-disconnect air hose fittings for fast and reliable assembly.

These and other objects of the invention will become readily apparent when reference is made to detailed description and the accompanying drawings.

Brief Description of the Drawings

Figure 1 is an overall side view of the scrubbing tool of the present invention.

Figure 2 is a perspective view of the bottom end of the scrubbing tool.

Figure 3 is a partial cross-section view of the lower end of the main support pole.

Figure 4 is a partial cross-section view of the upper end of the main support pole.

Figure 5 is a cross-section of the upper end of the main support pole.

Figure 6 is a partial cut-away view of the scrubbing brush.

Figure 7 is the cone brush of the invention.

Figure 8 is the disc attachment of the present invention.

Figure 9 is an overall side view of the portable scrubbing tool of the alternative embodiment of the present invention.

Figures 10, 10a, and 10b are the locking
elements for locking the auxiliary support pole to the
auxiliary extension pole of the alternative embodiment.

Figures 11, and 11a are the main support pole
sleeve of the alternate embodiment.

Figure 12 is the quick disconnect fitting of
the alternate embodiment.

Figure 13 is the interconnect element of the
alternate embodiment.

Figure 14 is a partial sectional view of the
brush member and motor of the alternate embodiment.

Figure 15 is a block diagram of the scrubbing
tool and air supply system of the alternate embodiment.


Detailed Description of the Drawings

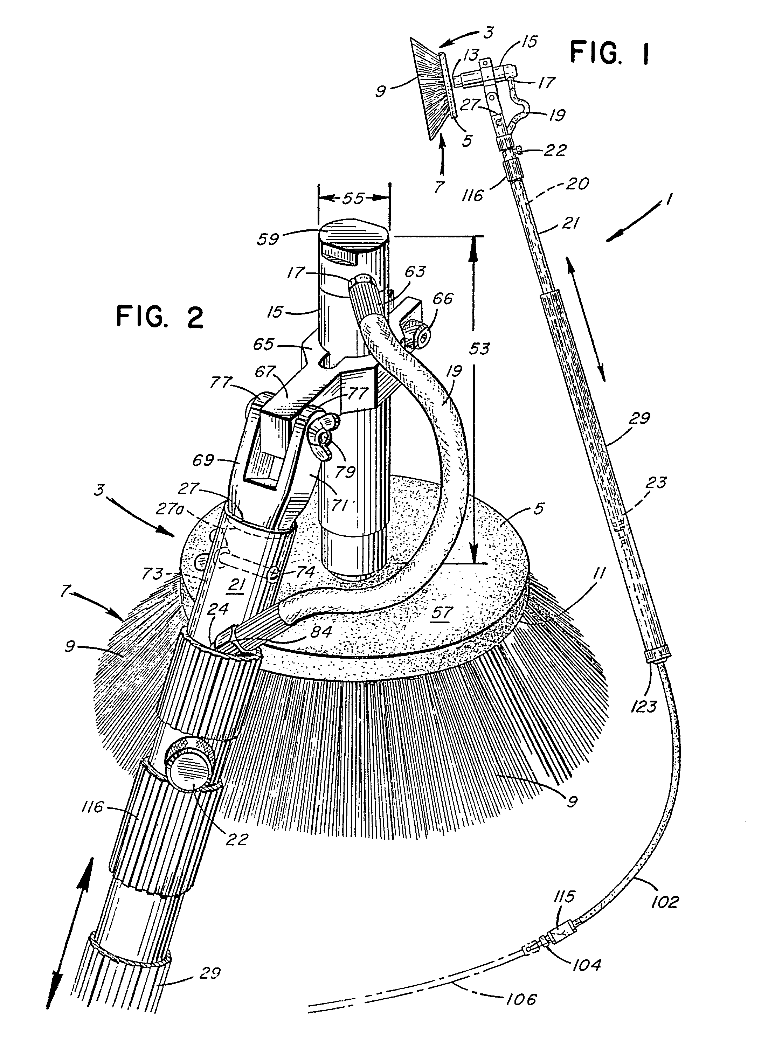

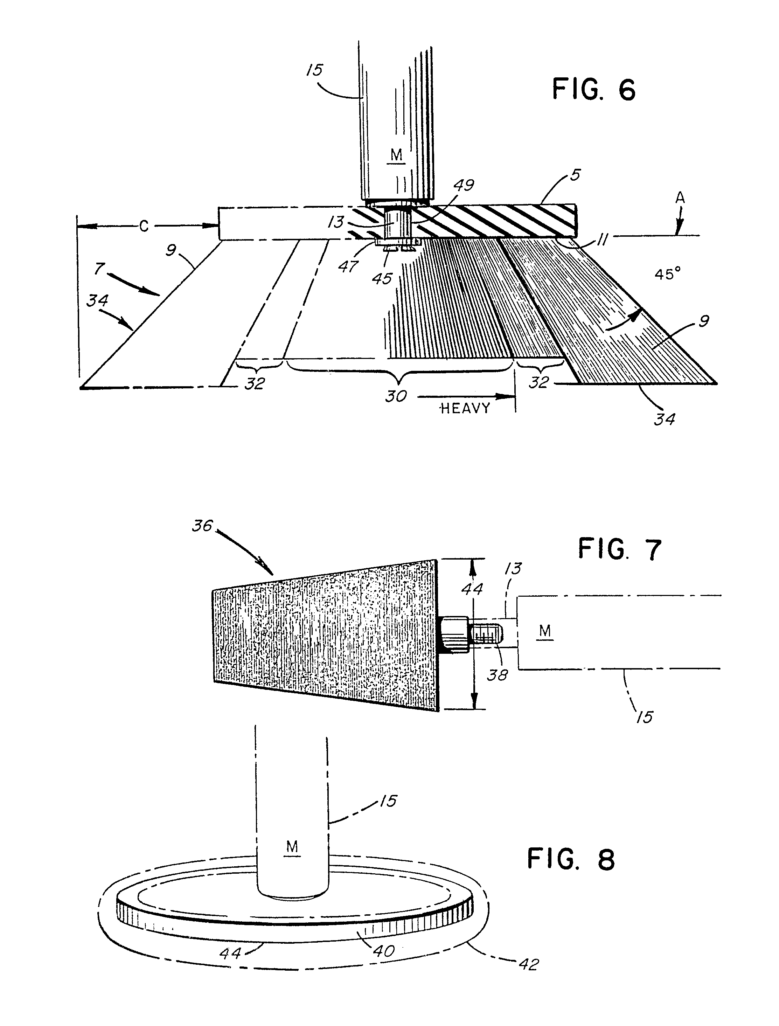

Referring to the Figures 1-8, a lightweight,
portable, pneumatic powered scrubbing tool 1 is disclosed and includes a scrubbing brush member 3 having a
mounting plate 5 and a brush 7 comprising a plurality
of brush bristles 9 affixed to one surface 11 of the
plate. The mounting plate 5 is centrally connected to
a drive shaft 13 of a slim, light weight, air-, or
noncombustible gas-, powered motor 15 of generally
cylindrical shape. Near the top end of the motor is a
male air hose fitting 17 for receiving a pneumatic
fluid supply hose 19. A main support pole 21 is
pivotally connected to the motor. The main support
pole 21 is tubular, hollow, and has a flexible pneumatic
fluid supply hose 20 extending from one end 23 of the
main support pole 21 toward the other end 27 of the
main support pole 21, where it connects with a shut-off and control valve 22, connected to a 45° union 24 that exits through an opening 26 at the periphery 25 of the main support pole. A hose 19 connects to the union 24 and is interconnected with the motor 15. An extension support pole 29 fits over the main support pole 21 and is extensible and lockable along the length of the main support pole 21, to be described further below.

A number of different types of brushes can be provided. The scrubbing brush member 3 comprises a substantially circular plate 5, preferably of hard rubber or plastic, of approximately six (6) inches in diameter. On one surface 11 of the circular plate 5 is a plurality of brush bristles 9 that are arranged around the plate, preferably in concentric rings of varying diameter. Disposed closest to the center of the plate and arranged to form an annulus around the center of the plate, are relatively hard bristles 30, suitable for scrubbing. These bristles 30 are shown to be substantially perpendicular to the plate 5, although they could be inclined at an angle with respect to the plate surface. Disposed annularly around the hard bristles 30 are softer bristles 32 suitable for polishing, of substantially the same length as the hard bristles 30. Disposed about the softer bristles 32, adjacent the periphery of the plate 5, are soft, elongated bristles 34, disposed at an angle A with respect to the plane of the plate 5 and disposed outwardly. These long bristles 34 are preferably approximately 50% longer than the shorter bristles. By angularly inclining at least the peripheral bristles 34, it can be seen that the diameter of the brush bristles 34, at their free end, is greater than the diameter of the plate. This affords a clearance C between the periphery of the plate 5 and the periphery of the free ends of the brush bristles 34. Thus, when the scrubbing tool 1 is applied to a surface to be cleaned, the plate 5 will not interfere with any irregular surfaces of the particular area being cleaned.

The longer length of the brushes 34 at a peripheral annular portion of the plate 5, provides a cup to retain the cleaning compound, either solid or liquid, from being hurled outward. Any cleaning compound that is thrown outward is caught by the longer bristles 34 and retained within the scrubbing brush area.

Centrally disposed in the plate 5 is a hole 49 that receives the drive shaft 13 of the motor 15. The plate 5 is fixedly secured to the motor drive shaft 13 by means of a bolt or screw 45 that is sunk directly into the motor shaft 13. The bolt 45, along with a washer 47, prevent the plate from sliding downwardly off of the drive shaft 13. The drive shaft 13 is round in cross-section and the plate 5 is force-fit onto the shaft 13. If, during operation, the brush should get caught, or retained in some manner, the motor shaft 13 will slip within the hole 49 of the plate, thus preventing any backlash to the operator, and preventing damage to the motor.

The brush member 3, including the plate 5 and brush bristles 9, is light weight, preferably less than six (6) pounds. The brush member 3 and the motor 15 comprise the unit that is to be positioned adjacent the surfaces to be cleaned, and thus, the overall weight of the unit must be sufficiently light weight for good maneuverability.

A cone brush 36 can also be used with the scrubbing tool of the present invention. The cone brush is a substantially conically shaped bristle arrangement having a screw 38 centrally mounted at the underside thereof. This screw is adapted to screw directly into the motor drive shaft 13. A cone brush is desirable when cleaning difficult-to-reach and small areas, such as landing gears and flap wells of aircraft.

Another brush arrangement that can be used is a circular disc attachment 40 which is mounted onto the drive shaft 15 in a manner similar to the scrubbing brush member 3, above-described. A soft cloth buffer, such as a chamois, in the form of a mitten 42, can be designed to fit around the disc 40 to provide an effective polishing cloth. The bottom surface 44 of the disc 40 can be burred, or roughened, not shown, and is adapted to engage a pad, such as a scouring pad. Friction between the scouring pad and the burred surface of the disc 40 is sufficient to maintain the pad thereon. As an alternative, one can use the flat disc 40 and provide a tape, not shown, permanently affixed to the underside 44 of the disc 40 wherein the tape has a burred surface to engage a scouring pad.

The motor 15 is a pneumatic motor, preferably an air powered motor, although a motor powered by some other noncombustible gas under pressure can be employed. The motor 15 is lightweight and of compact size so that no portion of the motor overhangs, or extends beyond the periphery of the brush plate 5, or the disc 40, or the maximum diameter 44 of the cone brush 36, or of any other attachment that might be designed for this invention. This enables the brush member 3 to be easily positioned in confined regions of the surface to be cleaned without the motor 15 colliding with and damaging the surfaces. This is, of course, extremely desirable when cleaning aircraft surfaces, wherein it is essential that no damage be done to critical aircraft parts adjacent to the cleaning surface.

-10-

The motor 15 is preferably a cylindrically-shaped motor having a length 53 substantially greater than the diameter 55 thereof. Preferably, the motor length 53, exclusive of the motor shaft, is approximately four inches and the diameter is approximately one inch, although other lengths can be used. A typical motor that can be employed, with modification, is the motor no. 7538-A manufactured by the Aro Corporation. The horsepower of the motor can vary and is preferably between .15 to .25 Hp.

At one end of the motor 15 is the motor drive shaft 13 which permits the motor 15 to be mounted so that its major axis, i.e., along its length, is substantially perpendicular to the top surface 57 of the circular plate 5, thus minimizing any interference between the motor 15 and the surface to be cleaned. Adjacent the opposite end 59 of the motor, extending radially from the motor, is an air-hose fitting 17, preferably a male fitting for receiving a mating female fitting 63 on the air hose 19 to supply the fluid source. Such fittings are well known in the art.

Surrounding the motor 15 and fixedly secured thereto is a motor sleeve 65. The sleeve 65 may be permanently secured to the motor 15 and integral therewith, or it may be removably secured to the motor 15 by means of any suitable connection such as a screw or a bolt 66. The motor sleeve 65 has, integral therewith, a radially extending flange 67. The flange 67 is adapted to be pivotally connected to a bracket 69, which, in turn, is connected to the main support pole 21, in a manner to be described below.

The bracket 69 is a unitary element, preferably made of metal, having a U-shaped portion 71 integral with a cylindrical rod 73. The U-shaped bracket 71 has a pair of legs 77 that are positioned over the radial flange 67 of the motor sleeve 65. A bolt 79 interconnects the legs 77 of the U-shaped bracket 71 to the radial flange with a close, yet freely movable, fit to permit rotary or pivotal movement. The bracket 69 must pivot, or rotate, with respect to the major axis of the motor 15 at least 45°, and preferably 135°.

The cylindrical rod 73, integral with the U-shaped bracket 71, is adapted to fit within a hollow portion 79 of the tubular main support pole 21. A bolt 74 or other suitable locking arrangement secures the rod 73 within the main support pole.

The main support pole 21 is a hollow, tubular pole, preferably of aluminum, and is of a sufficient length to enable the operator to reach remote areas of the surface to be cleaned. A four (4) foot long pole is preferable. Disposed within the pole 21 is a flexible pneumatic fluid conveying hose 20, such as an air hose. The air hose 20 is preferably a 1/4 inch high pressure hose. The air hose 20 extends substantially from one end 23 of the tubular pole 21, through the length of the pole 21, and connects to a shut-off, control valve 22. Control valve 22 can be manually adjusted by the operator to shut off the air supply through hose 20 to hose 19, and can be adjusted by the operator to vary the quantity of air flowing therethrough. Air hose 20 is connected with control valve 22 by means of a permanent fitting 80. Control valve 22 is disposed through an opening 82 in the main support pole 21 for easy manipulation by the operator. Control valve 22 is a conventional shut off and control valve.

Connected to the opposite side of control valve 22 is a union 24, which is angled at 45° to exit through opening 26 of the main support pole 21. The union is connected with a permanent fitting 84 to air hose 19, which, in turn, is connected to the motor as described above. Air hose 20 extends through main support pole 21 toward the opposite end 23 of the main support pole in a manner to be described.

Mounted at end 23 of the main support pole is a cylindrical mounting block 86 that is securely mounted in the end opening of main support pole 21. This cylindrical mounting block 86 is secured to the main support pole 21 by means of a screw 88, which has its head removed. The block has an opening 90, which is adapted to receive and retain a hollow pipe 92 therethrough. The opening 90 is off-set from the major axis of the main support pole 21, the purpose to be described below. The pipe 92 is threaded at both ends 94, 96. One end 94 of the pipe 92 is interconnected with a fitting 98, which permanently clamps air hose 20 thereto. The opposite end 96 of the pipe 92 is threadingly engaged with a fitting 100, which is securely interconnected with an intermediate air hose 102 that has a fitting 104 on its opposite end, preferably a quick-disconnect fitting, for connection to a main supply air hose 106 for receiving the air under pressure. Air is received from a compressor, as is described in the copending parent application, Serial No. 944,354.

Disposed around the pipe 92 is a twist-lock engaging member 108. This member 108 is cylindrically shaped with a hole 110 extending therethrough for receiving the pipe. The cylindrically-shaped member is rotatable about the pipe, and its outer diameter is substantially equal to the outer diameter of the main support pole 21. Washers 112 are provided on either

-13-

side of the member, wherein the washers 112 engage with the block 86 and with a collar 114. As discussed above, the opening 90, and thus the pipe 92, is offset slightly from the major axis, or center line of the main support pole. Likewise, the hole 110 in the cylindrical member 108 is offset from the center of the member 108 an equal amount. Thus, it can be seen that there is only one position where the cylindrical member 108 is aligned with the outer diameter of the main support pole 21. Thus, when the member 108 is rotated, it can move from a position in which it is coincident with the main support pole 21 outer diameter, into a position where it is eccentric with respect to the outer diameter of the main support pole 21. This permits a locking between the main support pole and the extension support pole 29, in a manner to be described. Reference should be made to copending application, Serial No. 944,354, Figure 2b, which shows a similar locking member used in a different embodiment.

Mounted on the intermediate air hose 102 is an oiler 114. The oiler 114 is a cylindrically-shaped, clear plastic member that has oil therewithin. When the air is provided to the motor, oil is picked up along with the air to lubricate the motor. This oiler 114 is a conventional device and may be optionally used with the present invention. Further, the oiler 114 can be positioned at various points on the intermediate air hose 102.

Coaxial with the main support pole 21, and disposed thereabout, is an extension support pole 29. The extension support pole 29 is a hollow, preferably aluminum, pole, preferably three feet in length. The extension support pole 29 is adapted to abut a sleeve 116 mounted on the main support pole 21, adjacent the control valve 22. This provides a lower limit for the inward extension of extension support pole 29. When in this position, the opposite end 118 of extension support pole 29 just encloses the fitting 100. Disposed at the opposite end 121 of the extension support pole 29 is a rubber or plastic cap 123, shown in Fig. 1, which maintains intermediate support hose 102 centered and free of engagement with the edges of extension support pole 29.

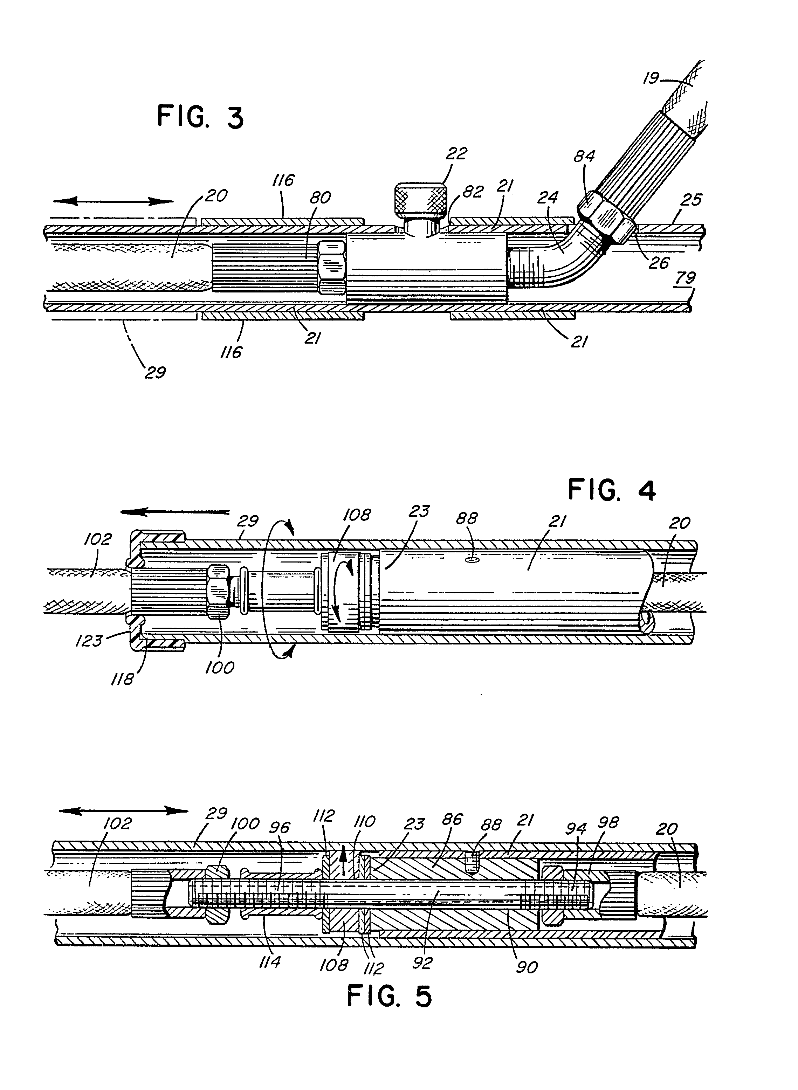

Extension support pole 29 is extendable and can be locked at selected positions with respect to main support pole 21. This locking is effectuated by means of the cylindrical member 108, as described above. As shown in Figures 4 and 5, a rotation of the extension support pole 29, in either direction, rotates the cylindrical member 108 eccentric with the main support pole 21 to provide an expansion fit between the extension support pole 29 and the main support pole 21. Rotation can be in either direction.

To use the above-described scrubbing tool 1, the operator will hold the extension support pole 29 and apply the brush member 3 to the surface to be cleaned. A quick turning of the extension support pole 29 in either direction enables the extension support pole 29 to be freed from locking with the main support pole 21, and thus extensible in either direction. A quick twist back will enable the locking to occur. The pivotal movement of main support pole 21 with motor 15 (which, in turn supports the brush), permits a highly maneuverable positioning of the brush adjacent difficult-to-reach and irregularly-shaped surface areas. Regardless of the relative position of motor 15 and the main support pole 21, the slim, compact motor size will not interfere with any irregularly-shaped surfaces on the surface to be cleaned.

-15-

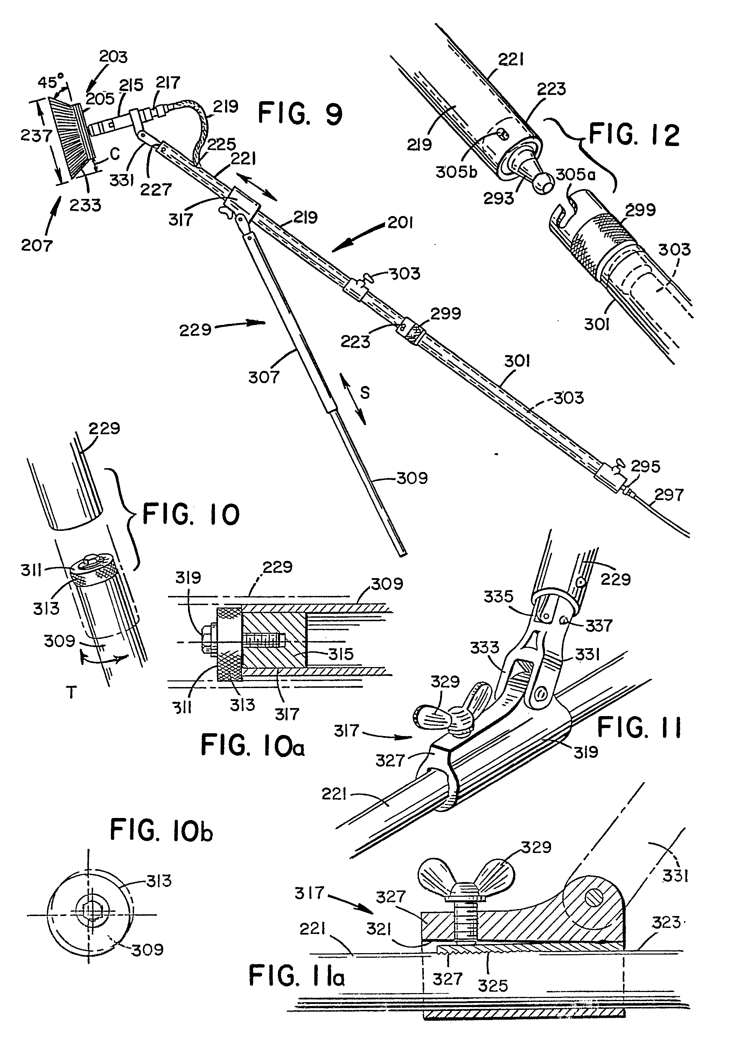

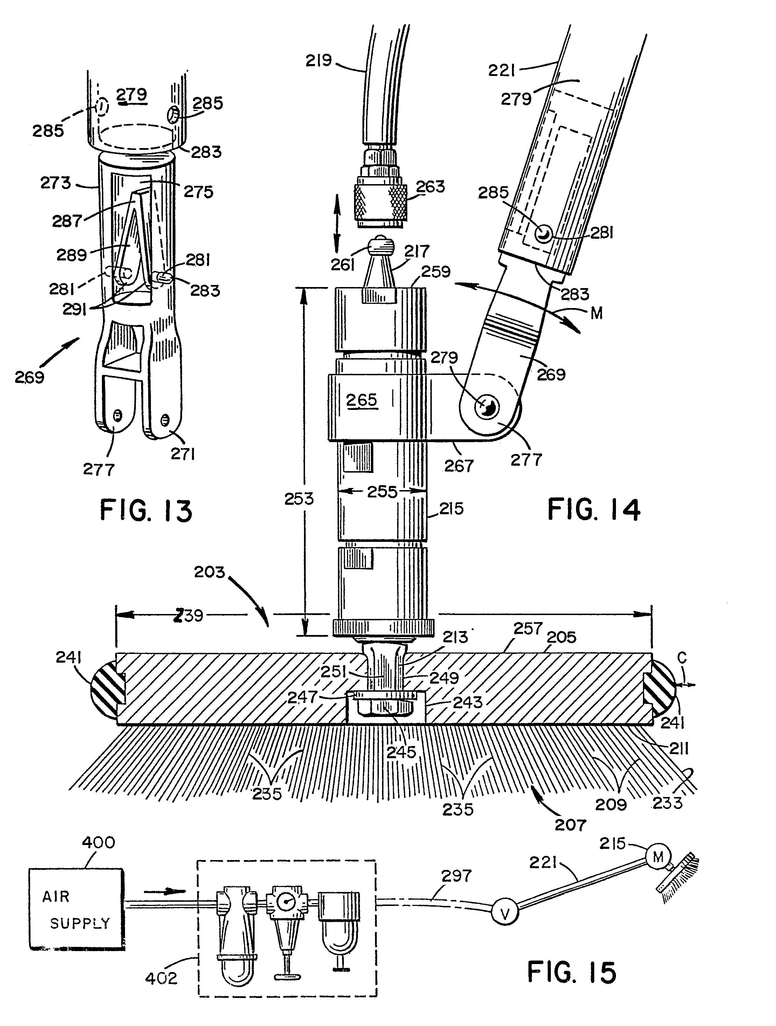

An alternative embodiment of the present invention is disclosed in Figures 9-15. The following is a description of the alternative embodiment.

Referring to Figures 9-15, a lightweight, portable, pneumatic powered scrubbing tool 201 is disclosed and includes a scrubbing brush member 203 having a mounting plate 205 and a brush 207 comprising a plurality of brush bristles 209 affixed to one surface 211 of the plate. The mounting plate 205 is centrally connected to a drive shaft 213 of a slim, lightweight, air-, or noncombustible gas-, powered motor 215 of generally cylindrical shape. One end of the motor has a quick-disconnect male air hose fitting 217 for receiving a pneumatic fluid supply hose 219. A main support pole 221 is pivotally connected to the motor. The main support pole 221 is tubular, hollow, and has a flexible pneumatic fluid supply hose 219 extending from one end 223 of the main support pole 221 and exiting at the periphery 225 of the main support pole adjacent the other end 227. The hose 219 exits the peripheral opening 225 and is interconnected with the motor 215. An auxiliary support pole 229 is pivotally connected to the main support pole at preselected positions along the length of the main support pole, to be described further below.

The brush member 203 comprises a substantially circular plate 205 of approximately six (6) inches in diameter, as indicated by numeral 239. Peripherially mounted about the plate 205 is a bumper guard 231, made of resilient material, in order to prevent damage to the surface to be cleaned. On one surface 211 of the circular plate 205 is a plurality of brush bristles 209 that are arranged around the plate, preferably in concentric rings of varying diameter, not shown. The bristles 233, affixed adjacent the circumferential periphery of the plate, are disposed angularly,
preferably at 45°, with respect to the plate, as shown
in Figure 9. The bristles 235 disposed closer to the
center of the plate can also be mounted angularly with
respect to the plate surface 211. The angles of the
bristles 235 with respect to the plate surface 211 can
be successively increased as one moves toward the
center of the plate 205. By angularly inclining at
least the peripheral bristles 233, it can be seen that
the diameter of the brush bristles at their free end
237 is greater than the diameter of the plate 239.
This affords a clearance C between the periphery 241 of
the plate 205 and bumper guard 231 and the periphery of
the free ends of the brush bristles. Thus, when the
scrubbing tool 201 is applied to a surface to be cleaned,
the plate 205 will not interfere with any irregular
surfaces of the particular area being cleaned. Further,
the angular inclination of the bristles enables a
greater surface area to be cleaned, yet still maintaining, a compact unit.

Centrally disposed on the side 211 of the
plate 205, where the bristles 209 are attached, is a
recess 243 to accommodate a bolt 245 and washer 247.
Centrally disposed in the plate 205 adjacent the recess
243 is a hole 249 that receives the drive shaft 213 of
the motor 215. The plate 205 is fixedly secured to the
motor drive shaft 213 by means of bolt 245 that is sunk
directly into the motor shaft 213. The bolt 245 and
washer 247 prevent the plate from sliding off of the
drive shaft 213. The drive shaft 213 has a flat 251.
Likewise, the hole 249 in the plate 205 has a
complementary flat (not shown) so that the plate 205 is
prevented from moving angularly with respect to the drive shaft 213. It should be recognized that any means for fixedly interconnecting the plate 205 to the drive shaft 213 can be provided so long as the plate 205 can be easily removed from the drive shaft for cleaning or for interchanging different size brush members 203.

The brush member 203, including the plate 205 and brush bristles 209, is lightweight, preferably less than six (6) pounds. The brush member 203 and the motor 215 comprise the unit that is to be positioned adjacent the surfaces to be cleaned, and thus the overall weight of the unit must be sufficiently light weight for good maneuverability.

The motor 215 is a pneumatic motor, preferably an air powered motor, although a motor powered by some other noncombustible gas under pressure can be employed. The motor 215 is lightweight and of compact size so that no portion of the motor overhangs, or extends beyond the periphery 241 of the brush plate. This enables the brush member 203 to be easily positioned in confined regions of the surface to be cleaned without the motor 215 colliding with and damaging the surfaces. This is, of course, extremely desireable when cleaning aircraft surfaces, wherein it is essential that no damage be done to ctritical aircraft parts adjacent to the cleaning surface.

The motor 215 is preferably a cylindrically-shaped motor having a length 253 substantially greater than the diameter 255 thereof. Preferably, the motor length 253, exclusive of the motor shaft, is approximately four inches and the diameter is approximately one inch. A typical motor that can be employed, with modification, is the motor no. 7358-A manufactured by the Aro Corporation. The horsepower of the motor can vary and is preferably between .15 and .25 Hp.

At one end of the motor 215 is the motor drive shaft 213 which permits the motor 215 to be mounted so that its major axis, i.e., along its length, is substantially perpendicular to the top surface 257 of the circular plate 205 thus minimizing any interference between the motor 215 and the surface to be cleaned. The opposite end 259 of the motor includes a quick-disconnect fitting 217, preferably a male fitting 261 for receiving a mating female fitting 263 on an air hose 219 to supply the fluid source. Such quick-disconnect fittings are well known in the art.

Surrounding the motor and fixedly secured thereto is a motor sleeve 265. The sleeve 265 may be permanently secured to the motor 215 and integral therewith, or it may be removably secured to the motor 215 by means of any suitable connection such as a screw or a bolt, not shown. The motor sleeve 265 has, integral therewith, a radially extending flange 267. The flange 267 is adapted to be pivotally connected to an interconnect element 269 to be described further below. The interconnect element 269 is, in turn, releasably connected to the main support pole 221, in a manner to be described below.

The interconnect element 269 is a unitary element, preferably made of plastic, having a U-shaped bracket 271 integral with a cylindrical rod 273 that is hollow 275 in part. The U-shaped bracket 271 has a pair of legs 277 that are positioned over the radial flange 267 of the motor sleeve 265. A bolt 279 interconnects the legs 277 of the U-shaped bracket 271 to the radial flange with a loose fit to permit rotary or pivotable movememt M. Preferably, the interconnect element 269 must pivot, or rotate with respect to the major axis of the motor 215 at least 45°.

The cylindrical rod 273, integral with the U-shaped bracket 271, is adapted to fit within a hollow portion 279 of the tubular main support pole 221. On the cylindrical rod 273 are a pair of pins or nipples 281 radially extending from the rod 273, preferably at 108° apart. These nipples 281 can be manually retracted toward the interior, or hollow part 275, of the cylindrical rod 273 by manual finger pressure. The nipples 281 are rounded at 283 and are biased outwardly in a manner to be described further below. When the cylindrical rod 273 is inserted into the main support pole 221, the nipples 281 are retracted by means of abutment against the edges 283 of the main support pole 221 and thereafter the nipples 281 expand to mate with a pair of holes 285 similarly positioned near the end of the main support pole 221. The nipples 281, when positioned in the holes 285 permit the interconnect member 269 to be fixedly, yet releasably, secured in the main support pole 221. When the interconnect member 269 is to be disconnected from the main support pole 221, the operator merely applies finger pressure against the nipples 281 while at the same time moving the pole 221 relative to the interconnect member 269, thus disengaging the nipples 281 from the holes 285.

The nipples 281 are part of an outwardly biased spring 287 positioned within the hollow space 275 within the cylindrical rod 273. The spring 287 is a V-shaped member 289 wherein the nipples 281 are disposed at the free ends 291 of the V. The V-shaped member 289 is resilient thus biasing the nipples 283 outwardly when inserted in the cylindrical rod 273.

The main support pole 221 is a hollow, tubular pole, preferably of aluminum, and is of a sufficient length to enable the operator to reach remote areas of the surface to be cleaned. A five (5) foot long pole is preferable. Disposed within the pole 221 is a flexible pneumatic fluid conveying hose 219, such as an air hose. The air hose 219 extends from one end 223 of the tubular pole 221, through the length of the pole 221, and exits at an opening 225 on the periphery of the pole 221. The opening 225 is adjacent the end 227 of the pole that is to be interconnected to the motor 215. The air hose 219 has a fitting 263 that is adapted to mate with the quick-disconnect fitting 217 on the motor 215. The opposite end of the hose 219 also has a quick-disconnect fitting 293 to mate with either a fitting 295 attached to a main pneumatic fluid supply hose 297, which is not specifically depicted in the drawings, or with a fitting 299 as part of a secondary main support pole 301, as shown in Figure 9 and described further below. The quick-disconnect fitting 293 connected with the hose 219, is mounted at the end of 223 of the main support pole 221. Preferably, the quick-disconnect fitting 293 is a male fitting. A suitable and conventional shutoff valve 303 is provided adjacent this fitting 293 so that the operator can selectively supply or shut-off a source of fluid to start or stop the motor 215. Any conventional shut-off valve can be used and is conventionally interconnected with the hose 219.

It should also be recognized that a gripping surface, or shoulder element, not shown, could be disposed around the periphery of the pole 221 adjacent the end 223 for ease of handling by the operator.

In the event that a longer main support pole is required in order to reach remote positions of the cleaning surface, a secondary main support pole 301 can be optionally utilized, as shown in Figure 9. This secondary support pole 301 is an elongated, hollow, preferably aluminum, pole having a hose 303 extending along the entire length thereof. Quick-disconnect fittings 295, 299 are provided at each end of the hose and mounted on opposite ends of the secondary support pole 301. The operator can simply add to the length of the main support pole by snapping in a secondary support pole 301 as his needs require. Clearly a number of additional support poles can be used depending upon the length required by the operator. Note that a bayonet-type connection 305a, 305b, can be provided to interconnect the main support pole 221 and the secondary main support pole 301, as is conventionally known in the art.

The quick-disconnect fitting 295, or 293 if no secondary main support pole is utilized, is adapted to be connected to a main supply hose 297, which in turn is connected to an air-supply compressor 400 to receive the fluid under pressure. Preferably, when using an air-powered motor, the compressor 400 should be connected to a so-called combination unit 402 that comprises a regulator, filter and lubricant source. The compressor 400 is regulated by the combination unit 402 so that the motor 215 will operate at no more than a preselected rate. For example, it is preferable that the motor 215 operate at no more than 200 psi per minute. This will be sufficient to provide efficient cleaning, yet with no damage to the aircraft or the surrounding areas by splattering. The lubricant is supplied and passed along with the air so that the air motor can be operated efficiently and not burn out. The combination unit is a conventional unit manufactured by the Aro Manufacturing Company.

An auxiliary support pole 229 is provided and is releasably and pivotally secured to the main support pole 221. The auxiliary support pole 229 is an elongated hollow tube 307 similar to the main support pole 221, and is preferably made of aluninum. Slidably disposed within the auxiliary support pole 307 is an auxiliary extension pole 309. The auxiliary extension pole 309 is an elongated tube of diameter slightly less than the inner diameter of the auxiliary support pole 307. The auxiliary extension pole 309 can be slidably removed from the auxiliary support pole 307, as shown at S in Figure 9, to a preselected position. The auxiliary extension pole 309 can be locked at any preselected position by means of a twisting action T, shown in Figure 10. This locking is provided by means of hub 311 having a knurled periphery 313 and eccentrically mounted in a plug 315 securely disposed in the end 317 of the extension pole 309. The knurled hub 311 is screwed into the plug by screw 319. When a locking action is required, the operator twists the auxiliary support pole 229 and the auxiliary extension pole 309 relative to each other, as shown as T, thus slightly unscrewing the extension pole 309 from the knurled hub 311. Because of the eccentric mounting, the extension pole 309 will be shifted within the auxiliary support pole 229 during the unscrewing action and will engage the inside surface of the auxiliary support pole 229. Other types of locking arrangements can be employed.

The auxiliary support pole 229 is pivotably connected with the main support pole 221 by means of a main support pole sleeve 317 that surrounds a portion of the main support pole 221. The main support sleeve 317 is a cylindrical sleeve 319, preferably plastic, disposed around the main support pole 221 with its inner diameter 321 at one end slightly greater than the outer diameter of the main support pole 221. Hingedly attached to the inside surface at 323 of the cylindrical sleeve is a gripping member in the form of a flap 325 that is hingedly connected at 323 to an inside surface of the cylindrical sleeve. The flap 325 may be a unitary element with the sleeve 317. The flap 325 has a gripping portion 327 that is adapted to abut against the main support sleeve 221. The main support sleeve has a radially extending flange portion 327 extending from the cylindrical sleeve 319 directly radial with the hinged flap 325. A wing nut 329 is provided that radially extends through the flange 327 and is adapted to exert pressure upon the flap 325 to urge the gripping portion 327 into gripping relationship with the main support pole 221. Thus, the operator will preselect the position that the main support sleeve 317 is to be positioned on the main support pole 221, and then tighten the wing nut 329 to secure the sleeve 317 at that position.

Pivotally connected to the flange 327 of the main support sleeve 317 is an interconnect element 331 that is identical in construction with the interconnect element 269 discussed above. The interconnect element 331 is a unitary element comprising a U-shaped bracket 333 unitary with a cylindrical rod 335. The cylindrical rod 335 is adapted to fit within the auxiliary support pole 229 and is secured therein by radially extending pins or nipples 337 that are biased outwardly from the cylindrical rod 335 in the same manner as discussed above with reference to interconnect element 269.

To use the above described scrubbing tool 201, the operator will hold the main and auxiliary support poles 221 and 229 in separate hands, and apply the brush member 203 to the surface to be cleaned. The pivotable movement of the main support pole 221 to the motor 215 which, in turn, supports the brush plate 205, and the pivotable connection between the main support pole 221 and the auxiliary support pole 229 permit a highly maneuverable positioning of the brush adjacent difficult to reach and irregularly shaped surface areas. Moreover, regardless of the relative position of the motor 215 and main support pole 221, the slim compact motor size will not interfere with any irregularly shaped surfaces on the surface to be cleaned.

The above description is illustrative only, and the invention is not to be limited except by reason of the following claims.

0012218

-25-

WHAT IS CLAIMED IS:

1. A lightweight, portable, pneumatic powered scrubbing tool comprising a brush means for brushing a surface; a pneumatic powered motor having a motor drive shaft connected to said brush means for rotating said brush means, said motor being mounted adjacent to said brush means and of a size so as not to extend beyond the periphery of said brush means, an elongated, tubular main support pole, means for pivotally connecting one end of said main support pole to said motor, a first flexible pneumatic fluid supply hose positioned substantially along the entire length of said main support pole and disposed therewithin, means for interconnecting said first flexible pneumatic fluid supply hose with said motor to provide pneumatic fluid to said motor for powering the motor, an elongated, tubular extension support pole coaxial with said main support pole and locking means for selectively positioning and locking said extension support pole to said main support pole at selected positions along the length of the main support pole.

2. The scrubbing tool as claimed in claim 1 wherein said locking means comprises means for locking said extension support pole to said main support pole by twisting said extension support pole and main support pole with respect to each other, in either direction.

3. The scrubbing tool as claimed in claim 1 wherein said locking means comprises a substantially cylindrical member, having a diameter substantially equal to the outer diameter of said main support pole, means for rotatably mounting said cylindrical member adjacent the end of the main support pole opposite the motor and eccentric to the major axis of the main support pole, wherein the circumferential side of the cylindrical member engages the inner surface of the extension support pole, and is rotatable by relative turning of the extension and main support poles to provide locking therebetween.

4. The scrubbing tool as claimed in claim 3 wherein said means for rotatably mounting said cylindrical member adjacent the end of the main support pole comprises a mounting block fixedly mounted within the end of the main support pole, a hollow pipe extending through the mounting block having one end positioned within the main support pole and the other end positioned outside the main support pole, said pipe displaced from the longitudinal axis of the main support pole, and means for rotatably supporting said cylindrical member about the pipe end outside of the main support pole.

5. The scrubbing tool as claimed in claim 4 wherein said first flexible pneumatic fluid supply hose is connected to said pipe end inside the main support pole.

6. The scrubbing tool as claimed in claims 4 or 5 wherein an intermediate flexible fluid supply hose is connected, at one end, to the end of the pipe outside of the main support pole, the other end of said intermediate hose connected to a quick disconnect fitting means for connection to a pneumatic fluid source.

7. The scrubbing tool as claimed in claim 6 further comprising an oiler means for providing oil to the pneumatic fluid, said oiler means connected to said intermediate hose.

8. The scrubbing tool as claimed in claim 1 wherein said motor comprises a compressed air-powered motor of substantially cylindrical shape, wherein the length of said motor is substantially greater than its diameter, said motor drive shaft extending from one end of the motor along its major axis.

9. The scrubbing tool as claimed in claim 1 wherein said means for interconnecting said first flexible pneumatic fluid supply hose with said motor comprises a second flexible pneumatic fluid supply hose, one end connected to said motor, the other end connected to a union, said union having one end disposed within said main support pole and connected to said first fluid supply hose, the other end of said union extending through an opening in the main support pole.

10. The scrubbing tool as claimed in claim 9 wherein a shut-off and control valve is interconnected with said union.

11. The scrubbing tool as claimed in claim 1 wherein said means for pivotally connecting said one end of said main support pole to said motor comprises a motor sleeve fixedly secured to said motor around the circumference thereof, said motor sleeve including a radial flange, a U-shaped bracket unitary with a cylindrical rod, said U-shaped bracket pivotally connected to said radial flange, said cylindrical rod fixedly secured within a hollow, tubular portion of said main support pole at said one end of the main support pole.

12. The scrubbing tool as claimed in claim 1 wherein said brush means comprises a scrubbing brush member having a substantially circular mounting plate, and a plurality of bristles affixed to one surface of the plate, at least a portion of said bristles affixed to said plate adjacent the periphery thereof and directed at an angle outwardly therefrom.

13. The scrubbing tool as claimed in claim 12 wherein said plurality of bristles comprises a plurality of stiff bristles affixed to said mounting plate about the center of the plate, an annular ring of soft bristles affixed to the mounting plate about the stiff bristles, an outer annular ring of soft bristles affixed to the mounting plate about the annular ring of soft bristles, and extending to the periphery of the plate, the length of the outer annular ring of soft bristles substantially longer than the other bristles.

14. The scrubbing tool as claimed in claim 13 wherein the outer annular ring of soft bristles are affixed to the plate at an angle thereto and extending outwardly of the plate periphery.

15. The scrubbing tool as claimed in claim 1 wherein said brush means comprises a conically-shaped brush.

16. The scrubbing tool as claimed in claim 1 wherein said brush means comprises a substantially circular disc, and means for interchangeably connecting a cleaning pad thereto.

17. The scrubbing tool as claimed in claim 16, wherein said cleaning pad comprises a cloth mitten disposed about the disc.

18. The scrubbing tool as claimed in claim 16 wherein one surface of the disc is burred to frictionally engage a pad.

19. A lightweight, portable, pneumatic powered scrubbing tool comprising a scrubbing brush member having a substantially circular mounting plate, and a plurality of bristles affixed to one surface of the plate, at least a portion of said bristles affixed to said plate adjacent the periphery thereof and directed at an angle outwardly therefrom, and pneumatic powered motor having a motor drive shaft connected to said
plate for rotating said plate, said motor positioned
adjacent the other surface of said plate, and of a size
so as not to extend beyond the periphery of said plate,
and elongated, tubular, main support pole, means for
pivotally connecting one end of said main support pole
to said motor, a flexible pneumatic fluid supply hose
within said main support pole extending from the other
end of said main support pole and throug an opening
defined in a peripheral portion of the main support
pole and connected to said motor, said opening located
adjacent said one end of the main support pole, a
quick-disconnect pneumatic fitting connected to said
fluid supply hose, said fitting mounted at the other
end of said main support pole, an elongated, tubular,
auxiliary support pole, and means for pivotally connecting said auxiliary support pole to said main support
pole, whereby said main support pole and said auxiliary
support pole are adapted to be similtaneously and
manually held by an operator during a scrubbing operation.

FIG. I

FIG. 2

**FIG. 3**

**FIG. 4**

**FIG. 5**

FIG. 6

FIG. 7

FIG. 8

0012218

FIG. 9

FIG. 12

FIG. 10

FIG. 10a

FIG. 10b

FIG. 11

FIG. 11a

FIG. 13

FIG. 14

FIG. 15

0012218

**Application number**

## EUROPEAN SEARCH REPORT

**European Patent Office**

EP 79 104 344.1

| DOCUMENTS CONSIDERED TO·BE RELEVANT | | | CLASSIFICATION OF THE APPLICATION (Int. Cl.） |
|---|---|---|---|
| Category | Citation of document with indication, where appropriate, of relevant passages | Relevant to claim | |
| X | US - A - 1 891 360 (SHEINMAN)<br>* complete document *<br>-- | 1 | A 47 L   1/05<br>A 46 B   13/02<br>B 60 S   3/04 |
| | US - A - 1 679 323 (MORTLOCK)<br>* complete document *<br>-- | 1 | |
| | GB - A - 1 211 028 (BARKER et al.)<br>* complete document *<br>-- | 1 | |
| A | DE - U - 6 931 425 (BAUDER)<br>-- | | **TECHNICAL FIELDS SEARCHED (Int.Cl.）**<br><br>A 46 B   11/00 |
| A | US - A - 2 801 431 (EASTIS)<br>-- | | A 46 B   13/00 |
| A | GB - A - 411 981 (TANGE)<br>-- | | A 47 C   1/00<br>B 60 S   3/00 |
| D | US - A - 3 648 316 (HABIAN et al.)<br>-- | | B 64 F   5/00 |
| D | US - A - 3 864 780 (WATKINS)<br>-- | | |
| D | US - A - 2 000 930 (BELA DE NAGY)<br>---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | |
|---|---|---|

| Place of search | Date of completion of the search | Examiner |
|---|---|---|
| Berlin | 14-02-1980 | KLITSCH |

EPO Form 1503.1   06.78